# EUROPEAN PATENT APPLICATION

(11) **EP 4 546 642 A1**
(43) Date of publication of application: **30.04.2025**
(21) Application number: 23829911.9
(22) Date of filing: 09.06.2023
(51) Int. Cl.: H02P 29/62

(54) **MOTOR DRIVING SYSTEM, VEHICLE AND DRIVING SYSTEM CONTROL METHOD**

(30) Priority: 29.06.2022 CN 202210761267
(71) Applicant: BYD Company Limited, Shenzhen, Guangdong 518118 (CN)
(72) Inventor: XU, Luhui, Shenzhen, Guangdong 518118 (CN); REN, Shaopeng, Shenzhen, Guangdong 518118 (CN); DU, Zhiyong, Shenzhen, Guangdong 518118 (CN)
(74) Representative: Taor, Simon Edward William
(86) International application number: PCT/CN2023/099529
(87) International publication number: WO 2024/001728

(57) **Abstract**

A motor driving system, a vehicle and a driving system control method are provided. The system comprises a heating controller, a motor controller and a driving motor. The heating controller is used for generating multiple PWM signals when the vehicle is in a parking state and a heating request is received, and outputting the multiple PWM signals to a motor controller so as to control the motor controller to output an alternating current to a stator, thereby enabling the stator and a rotor to generate heat in a static state and conduct the heat to an apparatus that initiates the heating request.

## Description

### CROSS-REFERENCE TO RELATED APPLICATIONS

The present disclosure claims priority to Chinese Patent Application No. 202210761267.7, filed on June 29, 2022 and entitled "MOTOR DRIVING SYSTEM, VEHICLE AND DRIVING SYSTEM CONTROL METHOD", which is incorporated herein by reference in its entirety.

### TECHNICAL FIELD

The present disclosure relates to the field of vehicle technologies, and specifically, to a motor driving system, a vehicle and a driving system control method.

### BACKGROUND

Considering that when used in a low-temperature environment, a vehicle further needs to have a heating function, in other words, a low-temperature device or a cabin inside the vehicle needs to be heated, for example, a battery needs to be heated, to improve charging and discharging capabilities of the battery in the low-temperature environment. At a current stage, an additional heating device is usually used to heat the low-temperature device, which causes low heating efficiency and also increases costs of the vehicle.

### SUMMARY

To overcome the problem in a related art, the present disclosure provides a motor driving system, a vehicle and a driving system control method.

To achieve the foregoing objective, according to a first aspect, the present disclosure provides a motor driving system, including:
a heating controller;
a motor controller, where the motor controller is connected to the heating controller; and
a driving motor, where the driving motor is connected to the heating controller, and is connected to the motor controller.

The heating controller is configured to: generate multiple PWM signals when detecting that a vehicle is in a parking state and a heating request is received, and output the multiple PWM signals to the motor controller so as to control the motor controller to output an alternating current to a stator of the driving motor, so that the stator and a rotor of the driving motor generate heat in a static state and conduct the heat to an apparatus that initiates the heating request.

Optionally, the heating controller is configured to generate the multiple PWM signals based on a q-axis reference current, a d-axis reference current, and three-phase currents of the driving motor and angle parameter information of the rotor.

Optionally, the heating controller includes:
a heating current processing module, configured to generate a q-axis target current and a d-axis target current based on the q-axis reference current and the d-axis reference current;
a current collection module, connected to the driving motor and configured to collect the three-phase currents;
an angle obtaining module, connected to the driving motor and configured to obtain the angle parameter information of the rotor;
a current conversion module, separately connected to the current collection module and the angle obtaining module and configured to generate a q-axis feedback current and a d-axis feedback current based on the three-phase currents and the angle parameter information;
a current regulation module, separately connected to the heating current processing module and the current conversion module and configured to generate a q-axis voltage and a d-axis voltage based on the q-axis target current, the d-axis target current, the q-axis feedback current, and the d-axis feedback current; and
a waveform processing module, separately connected to the current regulation module and the angle obtaining module and configured to generate multiple PWM signals based on the q-axis voltage, the d-axis voltage, and the angle parameter information.

Optionally, the alternating current is a high-frequency alternating current; and
the heating current processing module includes:
a high-frequency current generation unit, where the high-frequency current generation unit is configured to: generate a q-axis high-frequency sine wave current based on the q-axis reference current and a preset frequency, and generate a d-axis high-frequency sine wave current based on the d-axis reference current and the preset frequency; and
a current determining unit, where the current determining unit is connected to the high-frequency current generation unit, and is configured to: determine the q-axis target current from the q-axis reference current and the q-axis high-frequency sine wave current, and determine the d-axis target current from the d-axis reference current and the d-axis sine wave current.

Optionally, the high-frequency current generation unit includes:
a first channel, configured to output the q-axis reference current;
a second channel, configured to output the d-axis reference current;
a first generation unit, configured to generate the q-axis high-frequency sine wave current based on the q-axis reference current and the preset frequency; and
a second generation unit, configured to generate the d-axis high-frequency sine wave current based on the d-axis reference current and the preset frequency.

Optionally, the current determining unit includes:
a first switch unit, where the first switch unit includes:
a first movable terminal;
a first non-movable terminal, where the first non-movable terminal is connected to the first channel; and
a second non-movable terminal, where the second non-movable terminal is connected to the first generation unit;
a second switch unit, where the second switch unit includes:
a second movable terminal;
a third non-movable terminal, where the third non-movable terminal is connected to the second channel; and
a fourth non-movable terminal, where the fourth non-movable terminal is connected to the second generation unit; and
a first control unit, separately connected to the first movable terminal and the second movable terminal and configured to: control the first movable terminal to selectively connect to one of the first non-movable terminal and the second non-movable terminal, to select the q-axis target current from the q-axis reference current and the q-axis high-frequency sine wave current; and control the second movable terminal to selectively connect to one of the third non-movable terminal and the fourth non-movable terminal, to select the d-axis target current from the d-axis reference current and the d-axis sine wave current.

Optionally, the angle obtaining module includes:
a third switch unit, where the third switch unit includes a third movable terminal, a fifth non-movable terminal, and a sixth non-movable terminal;
an angle collection unit, connected to the fifth non-movable terminal and configured to directly collect a current-position angle of the rotor;
an angle simulation unit, connected to the sixth non-movable terminal and configured to generate a simulated angle based on phase information and angular velocity information of the driving motor; and
a second control unit, connected to the third movable terminal and configured to control the third movable terminal to selectively connect to one of the fifth non-movable terminal and the sixth non-movable terminal, to select the angle parameter information of the rotor from the current-position angle and the simulated angle.

One or two of the first non-movable terminal, the third non-movable terminal, and the fifth non-movable terminal are connected to a movable terminal corresponding thereto.

Optionally, when the third movable terminal is connected to the sixth non-movable terminal,
the first movable terminal is connected to one of the first non-movable terminal and the second non-movable terminal; and
the second movable terminal is connected to one of the third non-movable terminal and the fourth non-movable terminal.

Optionally, when the third movable terminal is connected to the fifth non-movable terminal,
the first movable terminal is connected to the second non-movable terminal, and the second movable terminal is connected to one of the third non-movable terminal and the fourth non-movable terminal; or
the first movable terminal is connected to the first non-movable terminal, and the second movable terminal is connected to the fourth non-movable terminal.

Optionally, the alternating current is a high-frequency alternating current, and a frequency of the high-frequency alternating current is greater than 300 Hz.

According to a second aspect, the present disclosure provides a vehicle, including the motor driving system provided in the first aspect of the present disclosure.

According to a third aspect, the present disclosure provides a motor driving system control method, including:
generating multiple PWM signals when detecting that a vehicle is in a parking state and a heating request is received;
generating an alternating current based on the multiple PWM signals; and
applying the alternating current to a stator of a driving motor, to cause the stator and a rotor of the driving motor to generate heat in a static state and conduct the heat to an apparatus that initiates the heating request.

In the foregoing technical solution, the motor driving system includes the heating controller, the motor controller, and the driving motor. The heating controller generates the multiple PWM alternating current signals when detecting that the vehicle is in the parking state and the heating request is received, and outputs the multiple PWM alternating current signals to the motor controller so as to control the motor controller to output the alternating current to the stator of the driving motor, so that the stator and the rotor of the driving motor generate heat in the static state and conduct the heat to the apparatus that initiates the heating request. The alternating current causes the stator to generate a high-frequency rotating magnetic field, so that a high-frequency eddy current is induced on the rotor of the driving motor. Because a rotation speed of the magnetic field is relatively high, the rotor cannot keep up with the high-speed rotating magnetic field of the stator, which is similar to motor stall. The rotor is in the static state, to cause the driving motor to generate more heat. In addition, the stator also generates heat because the alternating current flows through the stator. In this way, an existing motor driving system on the vehicle can be reused to generate heat when the vehicle is parked and heating is required, to heat the apparatus that initiates the heating request, enhance a heating capability and heating efficiency of the entire vehicle, and even cancel an additional heating device, so that parts of the vehicle are centralized, a volume is reduced, and costs of the vehicle are reduced.

Other features and advantages of the present disclosure will be described in detail in the following description of embodiments.

### BRIEF DESCRIPTION OF DRAWINGS

The accompanying drawings are intended to provide a further understanding of the present disclosure and constitute a part of the specification. The accompanying drawings are used together with the following description of embodiments to explain the present disclosure, but do not constitute a limitation on the present disclosure. In the drawings:
FIG. 1 is a block diagram of a motor driving system according to an example embodiment;
FIG. 2 is a topology diagram of a motor driving system according to an example embodiment;
FIG. 3 is a block diagram of a heating current processing module according to an example embodiment;
FIG. 4 is a topology diagram of a heating current processing module according to an example embodiment;
FIG. 5 is a topology diagram of an angle obtaining module according to an example embodiment; and
FIG. 6 is a flowchart of a vehicle driving system control method according to an example embodiment.

### DESCRIPTION OF EMBODIMENTS

The description of embodiments of the present disclosure is described in detail below with reference to the accompanying drawings. It should be understood that the description of embodiments described herein is merely used to describe and explain the present disclosure, and is not intended to limit the present disclosure.

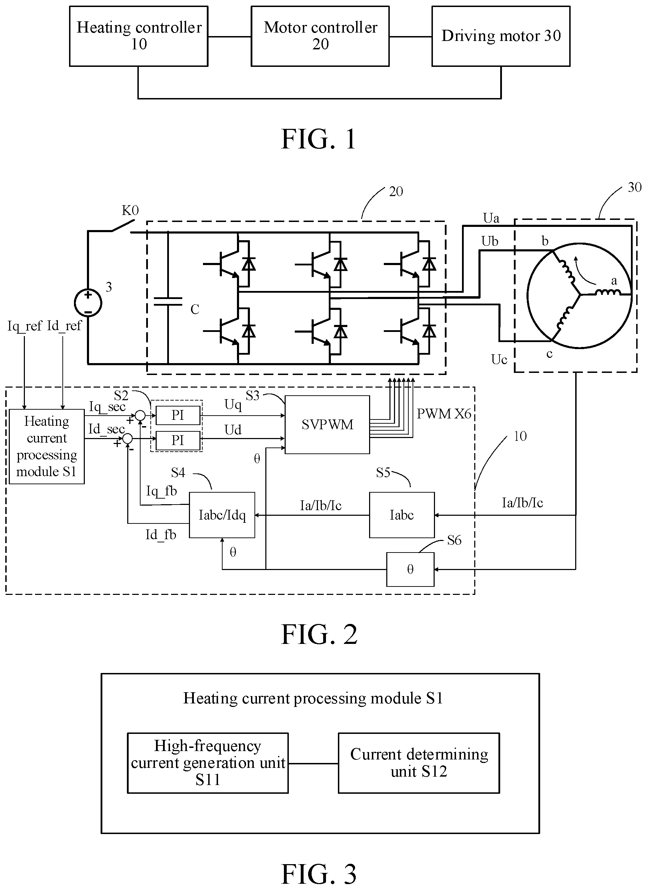

FIG. 1 is a block diagram of a motor driving system according to an example embodiment. As shown in FIG. 1, the motor driving system includes a heating controller 10, a motor controller 20, and a driving motor 30. The motor controller 20 is connected to the driving motor 30, and the heating controller 10 is separately connected to the motor controller 20 and the driving motor 30.

The heating controller 10 is configured to: generate multiple PWM alternating current signals when detecting that a vehicle is in a parking state and a heating request is received, and output the multiple PWM signals to the motor controller 20 so as to control the motor controller 20 to output an alternating current to a stator of the driving motor 30, so that the stator and a rotor of the driving motor 30 generate heat in a static state and conduct the heat to an apparatus that initiates the heating request.

For example, the apparatus that initiates the heating request may be a battery. In this way, an existing motor driving system on the vehicle can be reused to generate heat when the vehicle is parked, to heat the battery, thereby improving charging and discharging performance of the battery.

Specifically, the heating controller 10 may generate the multiple PWM signals based on a q-axis reference current, a d-axis reference current, and three-phase currents of the driving motor 30 and angle parameter information of the rotor.

In the present disclosure, the three-phase currents of three-phase windings of the driving motor 30 may be collected by using a three-phase current sensor. The angle parameter information of the rotor may be position angle information of the rotor.

The motor controller 20 generates an alternating current signal based on the multiple PWM alternating current signals, and outputs the alternating current signal to the stator of the driving motor 30, to cause the stator to generate a high-frequency rotating magnetic field. Further, a high-frequency eddy current is induced on the rotor of the driving motor, and the rotor generates heat due to an eddy current loss. Because a rotation speed of the high-frequency rotating magnetic field is relatively high, the rotor cannot keep up with the high-speed rotating magnetic field of the stator, which is similar to motor stall. The rotor is in the static state, to cause the driving motor to generate more heat. In this way, the rotor of the driving motor 30 generates the high-frequency eddy current in the static state, to generate heat. In addition, the stator of the driving motor 30 also generates heat because the alternating current flows through the stator.

In the foregoing technical solution, the motor driving system includes the heating controller, the motor controller, and the driving motor. The heating controller generates the multiple PWM alternating current signals when detecting that the vehicle is in the parking state and the heating request is received, and outputs the multiple PWM alternating current signals to the motor controller so as to control the motor controller to output the alternating current to the stator of the driving motor, so that the stator and the rotor of the driving motor generate heat in the static state and conduct the heat to the apparatus that initiates the heating request. The alternating current causes the stator to generate a high-frequency rotating magnetic field, so that a high-frequency eddy current is induced on the rotor of the driving motor. Because a rotation speed of the magnetic field is relatively high, the rotor cannot keep up with the high-speed rotating magnetic field of the stator, which is similar to motor stall. The rotor is in the static state, to cause the driving motor to generate more heat. In addition, the stator also generates heat because the alternating current flows through the stator. In this way, an existing motor driving system on the vehicle can be reused to generate heat when the vehicle is parked and heating is required, to heat the apparatus that initiates the heating request, enhance a heating capability and heating efficiency of the entire vehicle, and even cancel an additional heating device, so that parts of the vehicle are centralized, a volume is reduced, and costs of the vehicle are reduced.

As shown in FIG. 2, the motor controller 20 includes a bus capacitor C and a three-phase inverter (that is, six switching transistors). The driving motor 30 includes three-phase windings (namely, a, b, and c). The three-phase windings are respectively connected to midpoints of three-phase bridge arms of the three-phase inverter, a first bus terminal of the three-phase inverter is connected to a terminal of the bus capacitor C and a terminal of a switch K0, a second bus terminal of the three-phase inverter is connected to the other terminal of the bus capacitor C and a negative electrode of a battery 3, and the other terminal of the switch K0 is connected to the negative electrode of the battery 3.

As shown in FIG. 2, the heating controller 10 includes a heating current processing module S1, a current regulation module S2, a waveform processing module S3, a current conversion module S4, a current collection module S5, and an angle obtaining module S6.

The current collection module S5 is connected to the driving motor 30 (specifically, is connected to the three-phase windings of the driving motor 30), and is configured to collect the three-phase currents, namely, Ia, Ib, and Ic, of the driving motor 30. The current collection module S5 may be a three-phase current sensor.

The angle obtaining module S6 is connected to the driving motor 30, and is configured to obtain the angle parameter information *θ* of the rotor.

The current conversion module S4 is separately connected to the current collection module S5 and the angle obtaining module S6, and is configured to generate a q-axis feedback current iq_fb and a d-axis feedback current id_fb based on the three-phase currents (Ia, Ib, and Ic) and the angle parameter information *θ* of the rotor.

The heating current processing module S1 is configured to generate a q-axis target current iq_sec and a d-axis target current id_sec based on the q-axis reference current iq_ref and the d-axis reference current id_ref.

The current regulation module S2 is separately connected to the heating current processing module S1 and the current conversion module S4, and is configured to generate a q-axis voltage Uq and a d-axis voltage Ud based on the q-axis target current iq_sec, the d-axis target current id_sec, the q-axis feedback current iq_fb, and the d-axis feedback current id_fb. Specifically, the current regulation module S2 may perform PI control based on a difference between the q-axis target current iq_sec and the q-axis feedback current iq_fb to obtain the q-axis voltage Uq, and perform PI control based on a difference between the d-axis target current id_sec and the d-axis feedback current id_fb to obtain the d-axis voltage Ud.

The waveform processing module S3 is separately connected to the current regulation module S2 and the angle obtaining module S6, and is configured to generate multiple PWM alternating current signals based on the q-axis voltage Uq, the d-axis voltage Ud, and the angle parameter information *θ* of the rotor. The waveform processing module S3 may be specifically a space vector pulse width modulation (Space Vector Pulse Width Modulation, SVPWM) module, and is configured to generate the multiple PWM alternating current signals based on the q-axis voltage Uq, the d-axis voltage Ud, and the angle parameter information *θ* of the rotor according to a space voltage vector pulse width modulation method. The multiple PWM alternating current signals are specifically six PWM alternating current signals, namely, PWM X6 shown in FIG. 2.

The alternating current may be a high-frequency alternating current. For example, a frequency of the high-frequency alternating current is greater than 300 Hz. In this case, as shown in FIG. 3, the heating current processing module S1 may include a high-frequency current generation unit S11 and a current determining unit S12.

The high-frequency current generation unit S11 is configured to: generate a q-axis high-frequency sine wave current based on the q-axis reference current iq_ref and a preset frequency f, and generate a d-axis high-frequency sine wave current based on the d-axis reference current id_ref and the preset frequency f.

The current determining unit S12 is connected to the high-frequency current generation unit S11, and is configured to: determine the q-axis target current iq_sec from the q-axis reference current iq_ref and the q-axis high-frequency sine wave current, and determine the d-axis target current id_sec from the d-axis reference current id_ref and the d-axis sine wave current.

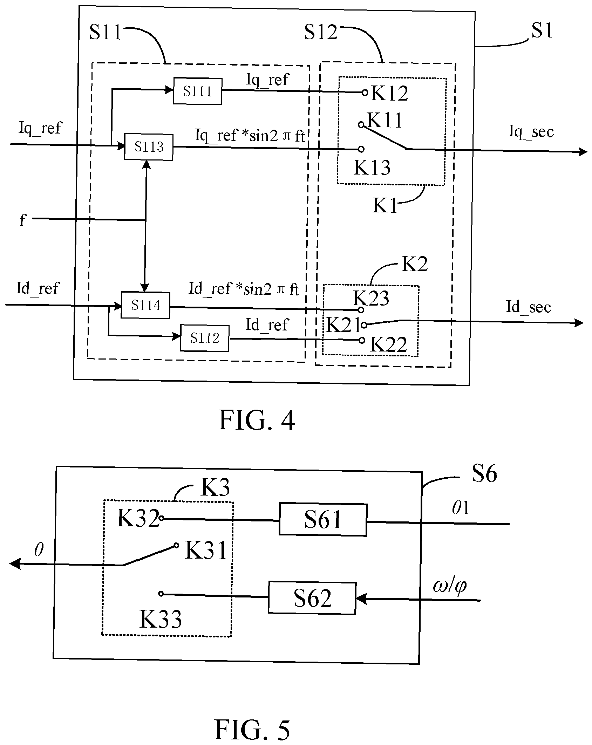

Specifically, as shown in FIG. 4, the high-frequency current generation unit S11 includes a first channel S111, a second channel S112, a first generation unit S113, and a second generation unit S114, and the current determining unit S12 includes a first switch unit K1, a second switch unit K2, and a first control unit (not shown in FIG. 4).

The first channel S111 is configured to output the q-axis reference current iq_ref. The second channel S112 is configured to output the d-axis reference current id_ref. The first generation unit S113 is configured to generate the q-axis high-frequency sine wave current based on the q-axis reference current iq_ref and the preset frequency f. The second generation unit S114 is configured to generate the d-axis high-frequency sine wave current based on the d-axis reference current id_ref and the preset frequency f.

For example, the q-axis high-frequency sine wave current is iq_ref*sin2πft, and the d-axis high-frequency sine wave current is id_ref*sin2πft, where t is time.

As shown in FIG. 4, the first switch unit K1 includes a first movable terminal K11, a first non-movable terminal K12, and a second non-movable terminal K13. The first non-movable terminal K12 is connected to the first channel S111, and the second non-movable terminal K13 is connected to the first generation unit S113.

The second switch unit K2 includes a second movable terminal K21, a third non-movable terminal K22, and a fourth non-movable terminal K23. The third non-movable terminal K22 is connected to the second channel S112, and the fourth non-movable terminal K23 is connected to the second generation unit S114.

The first control unit is separately connected to the first movable terminal K11 and the second movable terminal K21, and is configured to: control the first movable terminal K11 to selectively connect to one of the first non-movable terminal K12 and the second non-movable terminal K13, to select the q-axis target current from the q-axis reference current and the q-axis high-frequency sine wave current; and control the second movable terminal K21 to selectively connect to one of the third non-movable terminal K22 and the fourth non-movable terminal K23, to select the d-axis target current from the d-axis reference current and the d-axis sine wave current.

Specifically, when the first movable terminal K11 is connected to the first non-movable terminal K12, the q-axis target current iq_sec is the q-axis reference current iq_ref, in other words, the q-axis target current iq_sec is a direct current. When the first movable terminal K11 is connected to the second non-movable terminal K13, the q-axis target current iq_sec is the q-axis high-frequency sine wave current iq_ref*sin2πft, in other words, the q-axis target current iq_sec is a high-frequency alternating current. When the second movable terminal K21 is selectively connected to the fourth non-movable terminal K23, the d-axis target current id_sec is the d-axis high-frequency sine wave current id_ref*sin2πft, in other words, the d-axis target current id_sec is a high-frequency alternating current. When the second movable terminal K21 is selectively connected to the third non-movable terminal K22, the d-axis target current id_sec is the d-axis reference current id_ref, in other words, the d-axis target current id_sec is a direct current.

As shown in FIG. 5, the angle obtaining module S6 includes a third switch unit K3, an angle collection unit S61, an angle simulation unit S62, and a second control unit (not shown in FIG. 5).

The third switch unit K3 includes a third movable terminal K31, a fifth non-movable terminal K32, and a sixth non-movable terminal K33.

The angle collection unit S61 is connected to the fifth non-movable terminal K32, and is configured to directly collect a current-position angle *θ*1 of the rotor. For example, the angle collection unit S61 may be a position sensor.

The angle simulation unit S62 is connected to the sixth non-movable terminal K33, and is configured to generate a simulated angle based on phase information and angular velocity information of the driving motor 30.

For example, *θ*2 = ∫ *ωtdt + φ* , where *ω* is the angular velocity information of the rotor of the driving motor 30, and *φ* is the phase information of the rotor of the driving motor 30, and may be any phase angle.

The second control unit is connected to the third movable terminal K31, and is configured to control the third movable terminal K31 to selectively connect to one of the fifth non-movable terminal K32 and the sixth non-movable terminal K33, to select the angle parameter information of the rotor from the current-position angle *θ*1 of the rotor and the simulated angle *θ*2 .

Specifically, when the third movable terminal K31 is connected to the fifth non-movable terminal K32, the angle parameter information of the rotor is the current-position angle *θ*1.When the third movable terminal K31 is connected to the sixth non-movable terminal K33, the angle parameter information of the rotor is the simulated angle *θ*2 .

In the present disclosure, to enable the waveform processing module S3 to generate the multiple PWM alternating current signals, it needs to be ensured that the angle parameter information of the rotor is the simulated angle *θ*2 and/or at least one of the q-axis target current iq_sec and the d-axis target current id_sec is a high-frequency alternating current, so that the motor controller 20 outputs the high-frequency alternating current to the stator of the driving motor 30.To be specific, to enable the waveform processing module S3 to generate the multiple PWM alternating current signals, at least one of the following three conditions needs to be met: ① The angle parameter information of the rotor is the simulated angle *θ*2 ; ② the q-axis target current iq_sec is a high-frequency alternating current; and ③ the d-axis target current id_sec is a high-frequency alternating current.

Therefore, to enable the waveform processing module S3 to generate the multiple PWM alternating current signals, at least one of the second non-movable terminal K13, the fourth non-movable terminal K23, and the sixth non-movable terminal K33 is connected to a corresponding movable terminal, in other words, one or two of the first non-movable terminal K12, the third non-movable terminal K22, and the fifth non-movable terminal K32 are connected to a movable terminal corresponding thereto, in other words, not each of the first non-movable terminal K12, the third non-movable terminal K22, and the fifth non-movable terminal K32 can be connected to a corresponding movable terminal.

Specifically, to enable the waveform processing module S3 to generate the multiple PWM alternating current signals, the following condition (1) or condition (2) needs to be met:

Condition (1): When the angle parameter information of the rotor is the current-position angle *θ*1 of the rotor, the q-axis target current iq_sec and/or the d-axis target current id_sec are high-frequency sine wave currents, in other words, at least one of the q-axis target current iq_sec and the d-axis target current id_sec is a high-frequency sine wave current (where the sine wave current is an alternating current), in other words, at least one of the q-axis target current iq_sec and the d-axis target current id_sec is a high-frequency alternating current.

Correspondingly, when the third movable terminal K31 is connected to the fifth non-movable terminal K32, the first movable terminal K11 is connected to the second non-movable terminal K13, and the second movable terminal K21 is connected to one of the third non-movable terminal K22 and the fourth non-movable terminal K23; or the first movable terminal K11 is connected to the first non-movable terminal K12, and the second movable terminal K21 is connected to the fourth non-movable terminal K23.

Condition (2): When the angle parameter information of the rotor is the simulated angle *θ*2 , the q-axis target current iq_sec may be a direct current (in other words, may be the q-axis reference current iq_ref), or may be a high-frequency sine wave current. The d-axis target current id_sec may be a direct current (in other words, may be the d-axis reference current id_ref), or may be a high-frequency sine wave current.

Correspondingly, when the third movable terminal K31 is connected to the sixth non-movable terminal K33, the first movable terminal K11 is connected to one of the first non-movable terminal K12 and the second non-movable terminal K13, and the second movable terminal K21 is connected to one of the third non-movable terminal K22 and the fourth non-movable terminal K23.

In the foregoing implementation, the simulated angle *θ*2 is used, and/or it is ensured that at least one of the q-axis target current and the d-axis target current id_sec is a high-frequency alternating current, to cause the waveform processing module S3 to generate the multiple PWM alternating current signals, to cause the waveform processing module S3 to generate the multiple PWM alternating current signals. In this way, the motor controller 20 outputs a high-frequency alternating current to the stator of the driving motor 30, so that the stator generates a high-frequency rotating magnetic field, and further, a high-frequency eddy current is induced on the rotor of the driving motor, and the rotor generates heat due to an eddy current loss. In addition, the stator also generates heat because the high-frequency alternating current flows through the stator.

The present disclosure further provides a vehicle, including the foregoing motor driving system provided in the present disclosure.

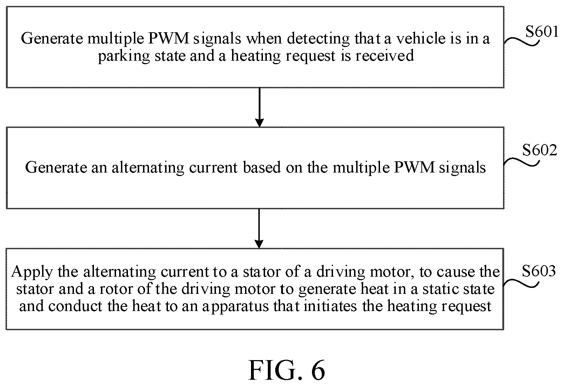

FIG. 6 is a flowchart of a motor driving system control method according to an example embodiment. As shown in FIG. 6, the method may include S601 to S603.

In S601, multiple PWM signals are generated when it is detected that a vehicle is in a parking state and a heating request is received.

In S602, an alternating current is generated based on the multiple PWM signals.

In S603, the alternating current is applied to a stator of a driving motor, to cause the stator and a rotor of the driving motor to generate heat in a static state and conduct the heat to an apparatus that initiates the heating request.

The multiple PWM alternating current signals are generated when it is detected that the vehicle is in the parking state and the heating request is received, and the alternating current is generated based on the multiple PWM alternating current signals. Then the alternating current is applied to the stator of the driving motor, to cause the stator and the rotor of the driving motor to generate heat in the static state and conduct the heat to the apparatus that initiates the heating request. The alternating current causes the stator to generate a high-frequency rotating magnetic field, so that a high-frequency eddy current is induced on the rotor of the driving motor. Because a rotation speed of the magnetic field is relatively high, the rotor cannot keep up with the high-speed rotating magnetic field of the stator, which is similar to motor stall. The rotor is in the static state, to cause the driving motor to generate more heat. In addition, the stator also generates heat because the alternating current flows through the stator. In this way, heat can be generated when the vehicle is parked and heating is required, to heat the apparatus that initiates the heating request, enhance a heating capability and heating efficiency of the entire vehicle, and even cancel an additional heating device, so that parts of the vehicle are centralized, a volume is reduced, and costs of the vehicle are reduced.

Optionally, the generating multiple PWM signals includes:
generating the multiple PWM signals based on a q-axis reference current, a d-axis reference current, and three-phase currents of the driving motor and angle parameter information of the rotor.

Optionally, the generating the multiple PWM signals based on a q-axis reference current, a d-axis reference current, and three-phase currents of the driving motor and angle parameter information of the rotor includes:
obtaining the three-phase currents and the angle parameter information of the rotor;
generating a q-axis target current and a d-axis target current based on the q-axis reference current and the d-axis reference current;
generating a q-axis feedback current and a d-axis feedback current based on the three-phase currents and the angle parameter information;
generating a q-axis voltage and a d-axis voltage based on the q-axis target current, the d-axis target current, the q-axis feedback current, and the d-axis feedback current; and
generating the multiple PWM signals based on the q-axis voltage, the d-axis voltage, and the angle parameter information.

Optionally, the alternating current is a high-frequency alternating current; and the generating a q-axis target current and a d-axis target current based on the q-axis reference current and the d-axis reference current includes:
generating a q-axis high-frequency sine wave current based on the q-axis reference current and a preset frequency, and generating a d-axis high-frequency sine wave current based on the d-axis reference current and the preset frequency; and
determining the q-axis target current from the q-axis reference current and the q-axis high-frequency sine wave current by using a current determining unit, and determining the d-axis target current from the d-axis reference current and the d-axis sine wave current.

Optionally, the generating a q-axis high-frequency sine wave current based on the q-axis reference current and a preset frequency, and generating a d-axis high-frequency sine wave current based on the d-axis reference current and the preset frequency includes:
outputting the q-axis reference current by using a first channel;
outputting the d-axis reference current by using a second channel;
generating the q-axis high-frequency sine wave current based on the q-axis reference current and the preset frequency by using a first generation unit; and
generating the d-axis high-frequency sine wave current based on the d-axis reference current and the preset frequency by using a second generation unit.

The determining the q-axis target current from the q-axis reference current and the q-axis high-frequency sine wave current, and determining the d-axis target current from the d-axis reference current and the d-axis sine wave current includes:
controlling a first movable terminal of a first switch unit to selectively connect to one of a first non-movable terminal and a second non-movable terminal of the first switch unit, to select the q-axis target current from the q-axis reference current and the q-axis high-frequency sine wave current; and controlling a second movable terminal of a second switch unit to selectively connect to one of a third non-movable terminal and a fourth non-movable terminal of the second switch unit, to select the d-axis target current from the d-axis reference current and the d-axis sine wave current.

The first non-movable terminal is connected to the first channel, and the second non-movable terminal is connected to the first generation unit.

The third non-movable terminal is connected to the second channel, and the fourth non-movable terminal is connected to the second generation unit.

Optionally, the obtaining the angle parameter information of the rotor includes:
directly collecting a current-position angle of the rotor by using an angle collection unit;
generating a simulated angle based on phase information and angular velocity information of the driving motor by using an angle simulation unit; and
controlling a third movable terminal of a third switch unit to selectively connect to one of a fifth non-movable terminal and a sixth non-movable terminal of the third switch unit, to select the angle parameter information of the rotor from the current-position angle and the simulated angle, where the angle collection unit is connected to the fifth non-movable terminal, and the angle simulation unit is connected to the sixth non-movable terminal K33.

One or two of the first non-movable terminal, the third non-movable terminal, and the fifth non-movable terminal are connected to a movable terminal corresponding thereto.

Optionally, when the third movable terminal is connected to the sixth non-movable terminal, the first movable terminal is connected to the second non-movable terminal, and the second movable terminal is connected to the fourth non-movable terminal.

Optionally, when the third movable terminal is connected to the fifth non-movable terminal,
the first movable terminal is connected to the second non-movable terminal, and the second movable terminal is connected to one of the third non-movable terminal and the fourth non-movable terminal; or
the first movable terminal is connected to the first non-movable terminal, and the second movable terminal is connected to the fourth non-movable terminal.

Optionally, the alternating current is a high-frequency alternating current, and a frequency of the high-frequency alternating current is greater than 300 Hz.

For the method in the foregoing embodiment, a specific manner of performing an operation in each step is already described in detail in the embodiment related to the motor driving system. Details are not described herein.

The foregoing describes in detail the optional implementations of the present disclosure with reference to the accompanying drawings. However, the present disclosure is not limited to specific details in the foregoing implementations. Within the technical concept scope of the present disclosure, multiple simple variations of the technical solutions of the present disclosure may be made, and these simple variations are within the protection scope of the present disclosure.

In addition, it should be noted that the specific technical features described in the foregoing description of embodiments may be combined in any suitable manner when there is no conflict. To avoid unnecessary repetition, various possible combination manners are not described in the present disclosure.

In addition, the various different implementations of the present disclosure may also be combined in any manner, and the combination should also be considered as content disclosed in the present disclosure provided that the combination does not deviate from the idea of the present disclosure.

## Claims

1. A motor driving system, comprising:
a heating controller (10);
a motor controller (20), the motor controller (20) being connected to the heating controller (20); and
a driving motor (30), the driving motor (30) being connected to the heating controller (10), and being connected to the motor controller (20),
the heating controller (10) being configured to: generate a plurality of PWM signals when detecting that a vehicle is in a parking state and a heating request is received, and outputting the plurality of PWM signals to the motor controller (20) so as to control the motor controller (20) to output an alternating current to a stator of the driving motor (30), so that the stator and a rotor of the driving motor (30) generate heat in a static state and conduct the heat to an apparatus that initiates the heating request.

2. The system according to claim 1, wherein the heating controller (10) is configured to generate the plurality of PWM signals based on a q-axis reference current, a d-axis reference current, and three-phase currents of the driving motor (30) and angle parameter information of the rotor.

3. The system according to claim 2, wherein the heating controller comprises:
a heating current processing module (S1), configured to generate a q-axis target current and a d-axis target current based on the q-axis reference current and the d-axis reference current;
a current collection module (S5), connected to the driving motor (30) and configured to collect the three-phase currents;
an angle obtaining module (S6), connected to the driving motor (30) and configured to obtain the angle parameter information of the rotor;
a current conversion module (S4), separately connected to the current collection module (S5) and the angle obtaining module (S6) and configured to generate a q-axis feedback current and a d-axis feedback current based on the three-phase currents and the angle parameter information;
a current regulation module (S2), separately connected to the heating current processing module (S1) and the current conversion module (S4) and configured to generate a q-axis voltage and a d-axis voltage based on the q-axis target current, the d-axis target current, the q-axis feedback current, and the d-axis feedback current; and
a waveform processing module (S3), separately connected to the current regulation module (S2) and the angle obtaining module (S6) and configured to generate a plurality of PWM signals based on the q-axis voltage, the d-axis voltage, and the angle parameter information.

4. The system according to claim 3, wherein the alternating current is a high-frequency alternating current; and the heating current processing module (S1) comprises:
a high-frequency current generation unit (S11), wherein the high-frequency current generation unit (S11) is configured to: generate a q-axis high-frequency sine wave current based on the q-axis reference current and a preset frequency, and generate a d-axis high-frequency sine wave current based on the d-axis reference current and the preset frequency; and
a current determining unit (S12), wherein the current determining unit (S12) is connected to the high-frequency current generation unit (S11), and is configured to: determine the q-axis target current from the q-axis reference current and the q-axis high-frequency sine wave current, and determine the d-axis target current from the d-axis reference current and the d-axis sine wave current.

5. The system according to claim 4, wherein the high-frequency current generation unit (S11) comprises:
a first channel (S111), configured to output the q-axis reference current;
a second channel (S112), configured to output the d-axis reference current;
a first generation unit (S113), configured to generate the q-axis high-frequency sine wave current based on the q-axis reference current and the preset frequency; and
a second generation unit (S114), configured to generate the d-axis high-frequency sine wave current based on the d-axis reference current and the preset frequency.

6. The system according to claim 5, wherein the current determining unit (S12) comprises:
a first switch unit (K1), wherein the first switch unit (K1) comprises:
a first movable terminal (K11);
a first non-movable terminal (K12), wherein the first non-movable terminal (K12) is connected to the first channel (S111); and
a second non-movable terminal (K13), wherein the second non-movable terminal (K13) is connected to the first generation unit (S113);
a second switch unit (K2), wherein the second switch unit (K2) comprises:
a second movable terminal (K21);
a third non-movable terminal (K22), wherein the third non-movable terminal (K22) is connected to the second channel (S112); and
a fourth non-movable terminal (K23), wherein the fourth non-movable terminal (K23) is connected to the second generation unit (S114); and
a first control unit, separately connected to the first movable terminal (K11) and the second movable terminal (K21) and configured to: control the first movable terminal (K11) to selectively connect to one of the first non-movable terminal (K12) and the second non-movable terminal (K13), to select the q-axis target current from the q-axis reference current and the q-axis high-frequency sine wave current; and control the second movable terminal (K21) to selectively connect to one of the third non-movable terminal (K22) and the fourth non-movable terminal (K23), to select the d-axis target current from the d-axis reference current and the d-axis sine wave current.

7. The system according to claim 6, wherein the angle obtaining module (S6) comprises:
a third switch unit (K3), wherein the third switch unit (K3) comprises a third movable terminal (K31), a fifth non-movable terminal (K32), and a sixth non-movable terminal (K33);
an angle collection unit (S61), connected to the fifth non-movable terminal (K32) and configured to directly collect a current-position angle of the rotor;
an angle simulation unit (S62), connected to the sixth non-movable terminal (K33) and configured to generate a simulated angle based on phase information and angular velocity information of the driving motor (30); and
a second control unit, connected to the third movable terminal (K31) and configured to control the third movable terminal (K31) to selectively connect to one of the fifth non-movable terminal (K32) and the sixth non-movable terminal (K33), to select the angle parameter information of the rotor from the current-position angle and the simulated angle,
wherein one or two of the first non-movable terminal (K12), the third non-movable terminal (K22), and the fifth non-movable terminal (K32) are connected to a movable terminal corresponding thereto.

8. The system according to claim 7, wherein when the third movable terminal (K31) is connected to the sixth non-movable terminal (K33),
the first movable terminal (K11) is connected to one of the first non-movable terminal (K12) and the second non-movable terminal (K13); and
the second movable terminal (K21) is connected to one of the third non-movable terminal (K22) and the fourth non-movable terminal (K23).

9. The system according to claim 7, wherein when the third movable terminal (K31) is connected to the fifth non-movable terminal (K32),
the first movable terminal (K11) is connected to the second non-movable terminal (K13), and the second movable terminal (K21) is connected to one of the third non-movable terminal (K22) and the fourth non-movable terminal (K23); or
the first movable terminal (K11) is connected to the first non-movable terminal (K12), and the second movable terminal (K21) is connected to the fourth non-movable terminal (K23).

10. The system according to any one of claims 1 to 9, wherein the alternating current is a high-frequency alternating current, and a frequency of the high-frequency alternating current is greater than 300 Hz.

11. A vehicle, comprising the motor driving system according to one of claims 1 to 10.

12. A motor driving system control method, comprising:
generating a plurality of PWM signals when detecting that a vehicle is in a parking state and a heating request is received;
generating an alternating current based on the plurality of PWM signals; and
applying the alternating current to a stator of a driving motor, to cause the stator and a rotor of the driving motor to generate heat in a static state and conduct the heat to an apparatus that initiates the heating request.
